Europäisches Patentamt

European Patent Office

Office européen des brevets

(19)

(11) Veröffentlichungsnummer: **0 034 658**

**A1**

(12) **EUROPÄISCHE PATENTANMELDUNG**

(21) Anmeldenummer: 80107750.4

(22) Anmeldetag: 09.12.80

(51) Int. Cl.³: **B 23 B 51/00**
**B 28 D 1/14**

(30) Priorität: 23.02.80 DE 3006812

(43) Veröffentlichungstag der Anmeldung:
02.09.81 Patentblatt 81/35

(84) Benannte Vertragsstaaten:
AT BE CH FR GB IT LI NL SE

(71) Anmelder: artur fischer forschung
Weinhalde 14 - 18
D-7244 Waldachtal 3 (Tumlingen)(DE)

(72) Erfinder: Fischer, Artur, Dr. h. c.
Weinhalde 34
D-7244 Waldachtal 3 / Tumlingen(DE)

(54) Bohreinheit zur Herstellung von hinterschnittenen Bohrlöchern.

(57) Die Erfindung betrifft eine Bohreinheit bestehend aus Bohrschaft (1) und mit diesem verbundenen Bohrplättchen (2), welches außer der Stirnschneide (3) den Bohrschaft (1) radial überragende Seitenschneiden (4,5) aufweist, wobei der Bohrschaft (1) einen dem das Bohrplättchen (2) umschreibenden Durchmesser entsprechenden kugelförmigen Bund (6) besitzt. Zur Herstellung von Bohrlöchern (9) mit Hinterschneidungen (22) bei Vermeidung eines Abriebs der Bohrlochmündung ist die Bohreinheit mit einer an der Oberfläche (8) des das Bohrloch (9) aufnehmenden Gegenstandes (10) anliegenden und eine Durchtrittsöffnung für den Bohrerschaft aufweisenden Platte (11) ausgestattet, an der eine kurze, in das Bohrloch (9) ragende, dem Bohrlochdurchmesser angepaßte Hülse (12) angeordnet ist.

EP 0 034 658 A1

./...

EP 1415

Zur Herstellung von Bohrlöchern bestimmte Bohreinheit

Die Erfindung betrifft eine zur Herstellung von Bohrlöchern mit Hinterschneidungen bestimmte Bohreinheit aus Bohrschaft und mit diesem verbundenen Bohrplättchen, welches außer der Stirnschneide den Bohrschaft radial überragende Stirnschneiden aufweist, wobei der Bohrschaft einen dem das Bohrplättchen umschreibenden Durchmesser entsprechenden kugelförmigen Bund besitzt.

Eine derartige Bohreinheit ist aus der DE-OS 23 49 998 bekannt. Mit dieser Bohreinheit wird zunächst das Bohrloch mit der gewünschten Tiefe gebohrt. Sodann werden mit dem Bohrer Schwenkbewegungen ausgeführt, bei denen der kugelförmige Bund durch sein Anliegen an der Bohrlochwandung das Schwenklager bildet. Entsprechend dem jeweils erreichten Grad der Hinterschneidung berührt der Bohrschaft beim Schwenken die Bohrlochwandung im Bereich der Bohrlochmündung. Bei Fortsetzung der Schwenkbewegungen besteht die Gefahr, daß die Bohrlochmündung und der sich unmittelbar anschließende zylindrische Teil des Bohrloches aufgerieben wird, da die am Bohrschaft befindlichen und das Bohrmehl abführenden Nuten wie Schneiden wirken. Schließlich kann auch die Gefahr bestehen, daß sich je nach Material des Gegenstandes, in den das Bohrloch eingebracht wird, der Bohrer verhakt und abbricht.

Der Erfindung liegt daher die Aufgabe zugrunde, hier Abhilfe zu schaffen.

Erfindungsgemäß wird dies dadurch erreicht, daß die Bohreinheit mit einer an der Oberfläche des das Bohrloch aufnehmenden Gegenstandes anliegenden und eine Durchtrittsöffnung für

EP 1415

den Bohrschaft aufweisende Platte ausgestattet ist, an der
eine kurze, in das Bohrloch ragende und dem Bohrlochdurchmesser angepaßte Hülse angeordnet ist.

Diese Platte mit Hülse sitzt lose auf dem Bohrschaft und wird
dann in die gebohrte Bohrung eingeführt, sobald eine entsprechende Bohrtiefe erreicht ist; die Platte mit Hülse wird spätestens dann eingeführt, wenn die angestrebte Bohrlochtiefe
erreicht ist und das Schwenken des Bohrers zur Herstellung
der Hinterschneidung beginnen soll. Durch diese erfindungsgemäße Ausgestaltung wird wirksam eine Beschädigung der Bohrlochmündung und der sich unmittelbar anschließenden Bohrlochwandung vermieden. Sie verhindert außerdem eine übermäßige
Reibung des Bohrschafts an der Bohrlochwandung während der
Herstellung der Hinterschneidung. Dies ist besonders wichtig,
um allein den Widerstand spüren zu können, der zur Ausarbeitung der Hinterschneidung erforderlich ist, ohne dabei den
Bohrer über dieses Ausmaß hinaus mit einer Biegelast zu beaufschlagen. Außerdem wird die Hinterschneidung nicht größer
als bei unbeschädigter Bohrlochmündung, so daß der für das
Bohrloch bestimmte Dübel formschlüssig in der Hinterschneidung sitzt.

In weiterer Ausgestaltung der Erfindung kann der Bohrschaft
im Bereich der Platte und ihrer Hülse eine Einschnürung aufweisen. Damit wird die Abfuhr des Bohrmehls erleichtert. Die
beste Förderung des Bohrmehls wird dann erreicht, wenn der
Durchmesser des Bohrschaftes dem Bohrlochdurchmesser entspricht. Dies kann hier nicht erreicht werden, da ansonsten
ein Schwenken des Bohrerschaftes nicht möglich wäre. Durch
die eingesetzte Hülse ist aber die Differenz zwischen Bohrlochdurchmesser und Durchmesser des Bohrschaftes zwangsläufig größer. Um hier ein günstigeres Verhältnis von Bohrlochdurchmesser zu Bohrschaftdurchmesser zu erreichen, ist die
erfindungsgemäße Einschnürung vorgesehen. Durch sie ist das
Schwenken des Bohrers im gewünschten Umfang ebenso möglich
wie eine noch gute Abführung des Bohrmehls.

EP 1415

Die Herstellung der Hinterschneidung des Bohrloches durch entsprechendes Schwenken des Bohrers erfordert durch die Hebeverhältnisse eine gewisse Geschicklichkeit, um ein Abbrechen des Bohrers zu vermeiden. Es muß bedacht werden, daß durch eine relativ schwere Bohrmaschine mit Schlag- oder Hammerwirkung nicht ohne weiteres gespürt werden kann, in welchem Ausmaß der Bohrerschaft auf Biegung belastet wird. Um hier Abhilfe zu schaffen, kann nach einer ergänzenden Ausgestaltung der Erfindung sich in der vom Bohrloch wegweisenden Richtung im Abstand zur ersten eine weitere Platte mit Durchtrittsöffnung für den Bohrerschaft befinden, deren Durchmesser demjenigen entspricht, den der Bohrschaft an dieser Stelle bei seiner Schwenkung zur Herstellung der Hinterschneidung beschreiben darf. Durch diese Ausgestaltung ist ein weiterer Abstützpunkt gegeben, durch den auch bei ungünstigen Hebeverhältnissen eine Überlastung des Bohrschafts in Biegerichtung weitgehend vermieden werden kann.

Nach einem anderen Merkmal der Erfindung kann es zweckmäßig sein, die beiden Platten zu einem Gehäuse zu vereinen, das mit einer Absaugvorrichtung für das Bohrmehl verbunden ist. Eine solche Absaugvorrichtung ist besonders dann wichtig, wenn Bohrlöcher in Decken gebohrt werden müssen.

Ergänzend hierzu kann es nach der Erfindung zweckmäßig sein, die erste Platte mit mehreren Durchtrittsöffnungen zu versehen, durch die das Bohrmehl abgesaugt wird, das zwischen Platte und Oberfläche des das Bohrloch aufnehmenden Gegenstandes geraten ist.

Schließlich kann nach der Erfindung auf den Bohrschaft ein an sich bekannter Tiefenanschlag mit konkaver Anschlagsfläche aufgesetzt sein.

0034658

EP 1415

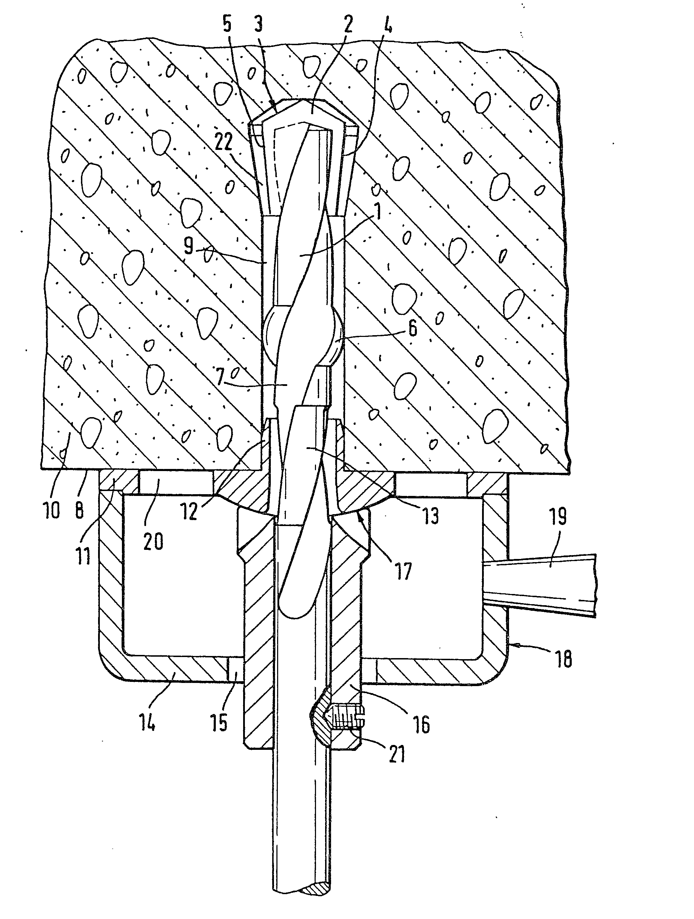

In der Zeichnung ist ein Ausführungsbeispiel der Erfindung dargestellt.

Die Bohreinheit besteht aus dem Bohrschaft 1 und dem mit diesem verbundenen Bohrplättchen 2. Dieses weist außer der Stirnschneide 3 noch radial über den Bohrschaft 1 hinausragende Seitenschneiden 4, 5 auf. Desweiteren besitzt der Bohrschaft 1 einen kugelförmigen Bund 6, der vorzugsweise einstückig mit dem Bohrschaft 1 hergestellt ist. Seine Lage in axialer Richtung hängt von der gewünschten Bohrlochtiefe ebenso ab wie von der Gesamtlänge des Bohrers wie von der Größe der angestrebten Hinterschneidung. Für die verschiedenen Verhältnisse können also entsprechende Ausgestaltungen der Bohreinheit hergerichtet werden. Der Bohrschaft 1 weist schließlich noch ein oder mehrere, das Bohrmehl abführende und den Schaft schraubenlinienförmig umwindende Nuten 7 auf.

Die Bohreinheit ist mit der an der Oberfläche 8 des das Bohrloch 9 aufnehmenden Gegenstandes 10 anliegenden Platte 11 ausgestattet, die die kurze, in das Bohrloch 9 ragende und dem Bohrlochdurchmesser angepaßte Hülse 12 trägt. Im Längenbereich dieser Hülse 12 ist der Bohrschaft mit der Einschnürung 13 versehen, über die sich die Bohrmehl fördernden Nuten 7 hinwegerstrecken. Im Abstand von der ersten Platte 11 ist die weitere Platte 14 angeordnet, die die Durchtrittsöffnung 15 für den Bohrschaft aufweist. Der Durchmesser der Durchtrittsöffnung 15 ist auf den maximal erlaubten Durchmesser abgestimmt, den der Bohrschaft beim Schwenken an dieser Stelle beschreiben darf. Auf den Bohrschaft ist schließlich noch ein Tiefenanschlag 16 aufgesetzt, der eine konkave Anschlagfläche 17 mit entsprechend ausgestalteter konvexer Gegenfläche an der Platte aufweist. Es ist zweckmäßig, den Tiefenanschlag 16 mit einer solchen Länge auszugestalten, daß er durch die Durchtrittsöffnung 15 hindurch ragt. Dadurch wird an dieser Stelle ein größerer Durchmesser erreicht, so daß die Wandung der Durchtrittsöffnung beim Schwenken einer geringeren Reibung aus-

EP 1415

gesetzt ist. Die Platten 11 und 14 können zu einem Gehäuse 18 verbunden sein, das über einen Schlauch 19 mit einer (nicht dargestellten) Absaugvorrichtung verbunden ist. In der Platte 11 sind Durchtrittsöffnungen 20 vorgesehen, durch die in den Spalt zwischen Platte 11 und Oberfläche 8 geratenes Bohrmehl abgesaugt werden kann. Es ist zweckmäßig, den Anschlag 16 mit dem Bohrschaft 1 fest zu verbinden z. B. durch Anordnung einer Stellschraube 21. Dadurch kann das Gehäuse 18 mit Bohrschaft zu einer Gesamteinheit verbunden werden, so daß ein Bohrgerät gegeben ist, bei dem alle zur Funktion und Herstellung einer Bohrung mit Hinterschneidung 22 notwendigen Teile vereinigt sind.

0034658

artur fischer forschung

7244 Tumlingen / Waldachtal      den 20. Februar 1980

Zn/Woe

- 1 -

EP 1415

P a t e n t a n s p r ü c h e

1.  Zur Herstellung von Bohrlöchern mit Hinterschneidungen
    bestimmte Bohreinheit aus Bohrschaft und mit diesem verbundenen Bohrplättchen, welches außer der Stirnschneide
    den Bohrschaft radial überragende Seitenschneiden aufweist, wobei der Bohrschaft einen dem das Bohrplättchen
    umschreibenden Durchmesser entsprechenden kugelförmigen
    Bund besitzt, dadurch gekennzeichnet, daß die Bohreinheit mit einer an der Oberfläche des das Bohrloch aufnehmenden Gegenstandes anliegenden und eine Durchtrittsöffnung für den Bohrerschaft aufweisenden Platte ausgestattet ist, an der eine kurze, in das Bohrloch ragende,
    dem Bohrlochdurchmesser angepaßte Hülse angeordnet ist.

2.  Bohreinheit nach Anspruch 1, dadurch gekennzeichnet,
    daß der Bohrschaft im Bereich der Platte und ihrer Hülse
    eine Einschnürung aufweist.

0034658

EP 1415

3. Bohreinheit nach Anspruch 1, dadurch gekennzeichnet, daß sich in der vom Bohrloch wegweisenden Richtung im Abstand zur ersten eine weitere Platte mit Durchtrittsöffnung für den Bohrschaft befindet, deren Durchmesser demjenigen entspricht, den der Bohrschaft an dieser Stelle bei seiner Schwenkung zur Herstellung der Hinterschneidung beschreiben darf.

4. Bohreinheit nach Anspruch 3, dadurch gekennzeichnet, daß die beiden Platten zu einem Gehäuse vereint sind, das mit einer Absaugvorrichtung für das Bohrmehl verbunden ist.

5. Bohreinheit nach Anspruch 4, dadurch gekennzeichnet, daß die erste Platte mit mehreren Durchtrittsöffnungen versehen ist.

6. Bohreinheit nach Anspruch 1, dadurch gekennzeichnet, daß auf den Bohrschaft ein ansich bekannter Tiefenanschlag mit konkaver Anschlagfläche aufgesetzt ist.

## EUROPÄISCHER RECHERCHENBERICHT

0034658

Nummer der Anmeldung

EP 80 10 7750.4

**Europäisches Patentamt**

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| | DE - A1 - 2 549 057 (A. FISCHER) <br> * Seite 4, Zeile 3 bis Seite 5; Fig. * <br> -- | 1,3,6 | B 23 B 51/00 <br> B 28 D 1/14 |
| | GB - A - 2 005 572 (A. FISCHER) <br> * Seite 1, Zeile 94 bis Seite 2, <br> Zeile 55; Fig. 1 * <br> -- | 1,3,6 | |
| | DE - A1 - 2 743 778 (A. FISCHER) <br> * Seite 3, Zeile 1 bis Seite 4, <br> Zeile 26; Fig. 1 * <br> -- | 1 | RECHERCHIERTE SACHGEBIETE (Int. Cl.³) |
| | DE - A1 - 2 715 340 (K. LUTZ) <br> * Ansprüche 1 bis 4, Seite 8, <br> Zeile 16 bis Seite 10, Zeile 9 * <br> -- | 1 | B 23 B 29/034 <br> B 23 B 41/06 <br> B 23 B 51/00 <br> B 27 G 15/02 |
| | DE - A1 - 2 657 000 (A. FISCHER) <br> * Seite 8, Zeilen 16 bis 22; Fig. 2 * <br> -- | 5 | B 28 D 1/00 <br> E 21 B 7/28 |
| D | DE - A1 - 2 349 998 (A. FISCHER) <br> -- | | |
| A | CH - A - 579 207 (STUMPP & KURZ) <br> -- | | KATEGORIE DER GENANNTEN DOKUMENTE |
| A | US - A - 3 299 748 (S.L. MOLLER) <br> -- | | |
| A | DE - A1 - 2 618 595 (R. BOSCH GMBH) <br> ---- | | |

X  Der vorliegende Recherchenbericht wurde für alle Patentansprüche erstellt.

| Recherchenort | Abschlußdatum der Recherche | Prüfer |
|---|---|---|
| Berlin | 14-05-1981 | MARTIN |

EPA form 1503.1 06.78